(19) Europäisches Patentamt
European Patent Office
Office européen des brevets

(11) **EP 4 186 620 A1**

(12) **EUROPEAN PATENT APPLICATION**
published in accordance with Art. 153(4) EPC

(43) Date of publication:
**31.05.2023  Bulletin 2023/22**

(21) Application number: **20950878.7**

(22) Date of filing: **31.08.2020**

(51) International Patent Classification (IPC):
**B23B 23/00** (2006.01)     **B23Q 17/00** (2006.01)

(52) Cooperative Patent Classification (CPC):
**B23B 23/00; B23Q 17/00**

(86) International application number:
**PCT/CN2020/112524**

(87) International publication number:
**WO 2022/041209 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **SHEN, Yi Xuan
  Shanghai 200093 (CN)**
• **LU, Chao
  100015 Beijing (CN)**
• **ZHOU, Xiao Zhou
  100102 Beijing (CN)**

(74) Representative: **Isarpatent
Patent- und Rechtsanwälte Barth
Charles Hassa Peckmann & Partner mbB
Friedrichstrasse 31
80801 München (DE)**

(54) **HOLDING FORCE DETERMINING METHOD AND APPARATUS, AND STORAGE MEDIUM**

(57)     A holding force determining method and apparatus, and a storage medium. The method comprises: according to a processing force of a processing device and geometrical information of a workpiece under processing, calculating a required minimum holding force; processing a CAD model of the workpiece by using finite element analysis, to obtain a workpiece characteristic curve (51); determining a head and tail stock for holding the workpiece, and processing a CAD model of the determined head and tail stock by using finite element analysis, to obtain a head and tail stock characteristic curve (52); according to the workpiece characteristic curve (51) and the head and tail stock characteristic curve (52), obtaining a system characteristic curve (53) representing the linear relation between a holding force and a system deformation amount; substituting the required processing precision of the workpiece into the system characteristic curve (53) as a maximum system deformation amount, to obtain a corresponding maximum allowable holding force; and determining a recommended holding force between the minimum holding force and the maximum holding force.

Fig. 1

**Description**

**Technical Field**

The present application relates to the industrial processing field, and in particular to a computer-aided engineering (CAE)-oriented holding force determining method and apparatus, and a computer-readable storage medium.

**Background Art**

For applications where a workpiece needs to be held between the headstock and the tailstock center of machining equipment for machining, for example, for grinding, it is necessary to hold the workpiece between the headstock and the pressing tip of the tailstock of a grinding machine for grinding. To fix the workpiece, a holding force should be exerted on the headstock and the tailstock. If the holding force is too small, machining equipment, for example, the grinding machine, is unable to hold the workpiece. If the holding force is too large, the workpiece will possibly be bent. The workpiece will be deformed under the action of the holding force between the two ends. It can be seen that the machining precision is directly related to the holding force.

Currently, the headstock and the tailstock of machining equipment both have a rated maximum holding force and a machining precision. The machining precision can be used as a reference in specific machining. However, the machining precision is a generic value and is sometimes not applicable to all situations.

**Summary of the Invention**

In view of this, embodiments of the present invention provide a holding force determining method in one aspect, and provide a holding force determining apparatus and a computer-readable storage medium in another aspect to recommend and select a proper holding force.

A holding force determining method provided by embodiments of the present invention comprises: calculating a required minimum holding force according to a force exerted by machining equipment, a coefficient of friction and geometrical information of a workpiece; processing a computer-aided design (CAD) model of the workpiece by use of the finite element analysis method, performing calculations based on a given first holding force to obtain a deformation amount of the workpiece corresponding to the holding force, and obtaining a workpiece characteristic curve representing a linear relationship between the holding force and the deformation amount of the workpiece according to the given first holding force and the corresponding deformation amount of the workpiece; determining a headstock and a tailstock for holding the workpiece, processing a CAD model of the determined headstock and tailstock by use of the finite element analysis method, performing calculations based on a given second holding force to obtain a deformation amount of the headstock and the tailstock corresponding to the second holding force, and obtaining a headstock-tailstock characteristic curve representing a linear relationship between the holding force and the deformation amount of the headstock and the tailstock according to the given second holding force and the corresponding deformation amount of the headstock and the tailstock; for the same holding force in the workpiece characteristic curve and the headstock-tailstock characteristic curve, adding the deformation amount of the workpiece and the deformation amount of the headstock and the tailstock together as a deformation amount of the system to obtain a system characteristic curve representing a linear relationship between the holding force and the deformation amount of the system; substituting the required machining precision of the workpiece as a maximum deformation amount of the system into the system characteristic curve to obtain a corresponding maximum allowable holding force; determining a recommended holding force between the minimum holding force and the maximum holding force.

In one implementation mode, the method further comprises: substituting the minimum holding force into the system characteristic curve to obtain a corresponding minimum deformation amount of the system and using the minimum deformation amount of the system as an ideal machining precision; substituting the recommended holding force into the system characteristic curve to obtain a corresponding recommended deformation amount of the system and using the recommended deformation amount of the system as a recommended machining precision.

In one implementation mode, the method further comprises: generating a recommendation report, and the recommendation report contains a required machining precision, a maximum holding force, an ideal machining precision, a minimum holding force, a recommended machining precision, and a recommended holding force.

In one implementation mode, the recommendation report further contains a system characteristic curve; the required machining precision, the maximum holding force, the ideal machining precision, the minimum holding force, the recommended machining precision and the recommended holding force are marked on the system characteristic curve.

In one implementation mode, the workpiece has holding ends; the headstock and tailstock have centers in contact with the holding end; geometrical information of the workpiece includes: top surface diameters, bottom surface diameters and heights of the conical surfaces of the holding ends in contact with the centers, and a maximum machining diameter of a machined surface.

In one implementation mode, determining a headstock and a tailstock for holding the workpiece comprises: matching the minimum holding force, and the acquired weight and size of the workpiece with the rated maximum holding forces, maximum holding weights and maximum holding sizes of different headstocks and tailstocks, and determining a headstock and a tailstock satisfying the requirements and having the highest machining precision to be the headstock and the tailstock for holding the workpiece.

In one implementation mode, processing a CAD model of the determined headstock and tailstock by use of the finite element analysis method and performing calculations based on a given second holding force to obtain a deformation amount of the headstock and the tailstock corresponding to the second holding force comprises: calculating a deformation amount of the roundness of the bearing holes in the headstock and the tailstock in the CAD model based on the given second holding force and using the obtained deformation amount of the roundness of the bearing holes as the deformation amount of the headstock and the tailstock corresponding to the second holding force.

A holding force determining apparatus provided by embodiments of the present invention comprises: at least one memory and at least one processor, wherein the at least one memory is configured to store a computer program, and the at least one processor is configured to invoke a computer program stored in the at least one memory to allow the apparatus to perform corresponding operations, and the operations include: calculating a required minimum holding force according to the force exerted by machining equipment, the coefficient of friction and the geometrical information of a workpiece; processing a computer-aided design (CAD) model of the workpiece by use of the finite element analysis method, performing calculations based on a given first holding force to obtain a deformation amount of the workpiece corresponding to the holding force, and obtaining a workpiece characteristic curve representing a linear relationship between the holding force and the deformation amount of the workpiece according to the given first holding force and the corresponding deformation amount of the workpiece; determining a headstock and a tailstock for holding the workpiece, processing a CAD model of the determined headstock and tailstock by use of the finite element analysis method, performing calculations based on a given second holding force to obtain a deformation amount of the headstock and the tailstock corresponding to the second holding force, and obtaining a headstock-tailstock characteristic curve representing a linear relationship between the holding force and the deformation amount of the headstock and the tailstock according to the given second holding force and the corresponding deformation amount of the headstock and the tailstock; for the same holding force in the workpiece characteristic curve and the headstock-tailstock characteristic curve, adding the deformation amount of the workpiece and the deformation amount of the headstock and the tailstock together as a deformation amount of the system to obtain a system characteristic curve representing a linear relationship between the holding force and the deformation amount of the system; substituting the required machining precision of the workpiece as a maximum deformation amount of the system into the system characteristic curve to obtain a corresponding maximum allowable holding force; determining a recommended holding force between the minimum holding force and the maximum holding force.

In one implementation mode, the operations further comprise: substituting the minimum holding force into the system characteristic curve to obtain a corresponding minimum deformation amount of the system and using the minimum deformation amount of the system as an ideal machining precision; substituting the recommended holding force into the system characteristic curve to obtain a corresponding recommended deformation amount of the system and using the recommended deformation amount of the system as a recommended machining precision.

In one implementation mode, the operations further comprise: generating a recommendation report, and the recommendation report contains a required machining precision, a maximum holding force, an ideal machining precision, a minimum holding force, a recommended machining precision and a recommended holding force.

In one implementation mode, the recommendation report further contains a system characteristic curve, and the required machining precision, the maximum holding force, the ideal machining precision, the minimum holding force, the recommended machining precision and the recommended holding force are marked on the coordinates where the system characteristic curve is located.

In one implementation mode, the workpiece has holding ends; the headstock and tailstock have a center in contact with the holding ends; geometrical information of the workpiece includes: top surface diameters, bottom surface diameters and heights of the conical surfaces of the holding ends in contact with the center, and a maximum machining diameter of a machined surface.

In one implementation mode, determining a headstock and a tailstock for holding the workpiece comprises: matching the minimum holding force, and the acquired weight and size of the workpiece with the rated maximum holding forces, maximum holding weights and maximum holding sizes of different headstocks and tailstocks, and determining the headstock and the tailstock satisfying the requirements and having the highest machining precision to be a headstock and a tailstock for holding the workpiece.

In one implementation mode, processing a CAD model of the determined headstock and tailstock by use of the finite element analysis method and performing calculations based on a given second holding force to obtain a deformation amount of the headstock and the tailstock corresponding to the second holding force comprises: calculating a deformation amount of the roundness of the bearing holes in the headstock and the tailstock in the CAD model based on the given second holding force and using the obtained deformation amount of the roundness of the bearing holes as the deformation amount of the headstock and the tailstock corresponding to the second holding force.

Another holding force determining apparatus provided by embodiments of the present invention comprises: a workpiece information calculation module, configured to calculate a required minimum holding force according to the force exerted by machining equipment, the coefficient of friction and the geometrical information of a workpiece; process a CAD model of the workpiece by use of the finite element analysis method, perform calculations based on a given first holding force to obtain a deformation amount of the workpiece corresponding to the holding force, and obtain a workpiece characteristic curve representing a linear relationship between a holding force and a deformation amount of the workpiece according to the given first holding force and the corresponding deformation amount of the workpiece; a headstock and tailstock information calculation module, configured to determine a headstock and a tailstock for holding the workpiece, process a CAD model of the determined headstock and tailstock by use of the finite element analysis method, perform calculations based on a given second holding force to obtain a deformation amount of the headstock and the tailstock corresponding to the second holding force, and obtain a headstock-tailstock characteristic curve representing a linear relationship between a holding force and a deformation amount of the headstock and the tailstock according to the given second holding force and the corresponding deformation amount of the headstock and the tailstock; and a system evaluation module, configured for the same holding force in the workpiece characteristic curve and the headstock-tailstock characteristic curve to add the deformation amount of the workpiece and the deformation amount of the headstock and the tailstock together as a deformation amount of the system to obtain a system characteristic curve representing a linear relationship between a holding force and a deformation amount of the system, substitute the required machining precision of the workpiece as a maximum deformation amount of the system into the system characteristic curve to obtain a corresponding maximum allowable holding force, and determine a recommended holding force between the minimum holding force and the maximum holding force.

A computer-readable storage medium provided in the embodiments of the present invention stores a computer program and the computer program can be executed by a processor to realize the holding force determining method in any of the above-mentioned implementation modes.

From the above-mentioned technical solution, it can be seen that a system characteristic curve representing a linear relationship between a holding force and a deformation amount of the system by using the CAE tool to perform finite element analyses of CAD models of a workpiece and a headstock and tailstock in embodiments of the present invention. A deformation amount of the system can be used as a machining precision of a workpiece. Therefore, holding forces corresponding to different machining precisions and machining precisions corresponding to different holding forces can be figured out based on the system characteristic curve, and thus, a recommended holding force between a minimum holding force and a maximum holding force is finally obtained so that the user can select a proper holding force.

**Brief Description of the Drawings**

Preferred embodiments of the present invention will be described in detail below by reference to the drawings so that those skilled in the art can have a clearer idea of the above-mentioned and other characteristics and advantages of the present invention.

Fig. 1 is an exemplary flowchart of a holding force determining method in embodiments of the present invention.
Fig. 2 is a schematic diagram of the import of related information of a workpiece from a database in an example of the present invention.
Fig. 3 is a schematic diagram of the process of calculating a required minimum holding force of a workpiece in an example of the present invention.
Fig. 4 is a schematic diagram of automatic matching of a headstock and a tailstock in an example of the present invention.
Fig. 5 is a schematic diagram of a workpiece characteristic curve, a headstock-tailstock characteristic curve and a system characteristic curve in an example of the present invention.
Fig. 6 is an exemplary structure diagram of a holding force determining apparatus in embodiments of the present invention.
Fig. 7 is an exemplary structure diagram of another holding force determining apparatus in embodiments of the present invention.

Description of reference numerals in the drawings:

| Reference numeral | Meaning |
| --- | --- |
| 101-106 | Steps |
| 61 | Workpiece information calculation module |
| 62 | Headstock and tailstock information calculation module |
| 63 | System evaluation module |
| 71 | Memory |
| 72 | Processor |
| 73 | Display |
| 74 | Bus |

**Detailed Description of the Invention**

In embodiments of the present invention, considering that CAE is a common tool in a current mechanical analysis, the CAE technology can be utilized to calculate a related deformation amount of a workpiece under machining and a deformation amount can be considered as a machining precision. That is to say, if the related deformation amount of a workpiece under machining is 10, the machining precision is 10. The related deformation amount of a workpiece under machining includes a deformation amount of the workpiece itself and deformation amounts of a headstock and a tailstock. Therefore, the machining precision of a workpiece can be represented by the deformation amount of the workpiece and the deformation amount of a headstock and a tailstock. A linear relationship is basically satisfied between a holding force and a deformation amount. Thus, a corresponding holding force can be figured out according to a required machining precision.

To make clearer the objects, technical solutions, and advantages of the present invention, embodiments will be given below to further describe the present invention in detail.

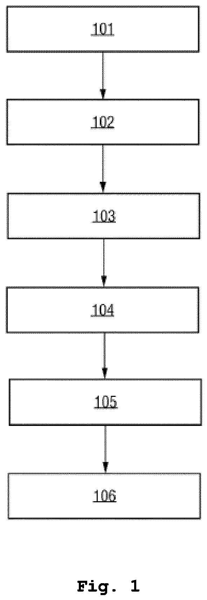

Fig. 1 is an exemplary flowchart of a holding force determining method in embodiments of the present invention. As shown in Fig. 1, the method may comprise the following steps:

Step 101, calculate a required minimum holding force according to the force exerted by machining equipment, the coefficient of friction and the geometrical information of a workpiece.

In this step, a force exerted by different machining equipment is different. For example, a force exerted by a grinding machine is a grinding force, and a force exerted by a turning machine is a turning force. Besides, a broaching force or a boring force may be exerted. In addition, for different end zones and different workpieces, the coefficient of friction and geometrical information are also different. The coefficient of friction refers to the coefficient of friction between a workpiece and the end zone of machining equipment.

In the case that the machining equipment is a grinding machine and the end zone is a center, the coefficient of friction refers to the coefficient of friction between a workpiece and the center. In an example, geometrical information of a workpiece may include: top surface diameters, bottom surface diameters and heights (also known as central distances) of the conical surfaces of the holding ends of the workpiece in contact with the centers of the headstock and tailstock, and a maximum machining diameter of a machined surface. In addition, the weight and the size of the workpiece may be further included. This information may be imported together with a CAD model of the workpiece, for example, from a database. Or all this information can be obtained by measuring a CAD model of the workpiece. For example, the top surface diameter, the bottom surface diameter, the height and the maximum machining diameter of a machined surface can be obtained by measuring a CAD model of the workpiece. In addition, related information of different workpieces can be stored in the database so that the data can be read from the database.

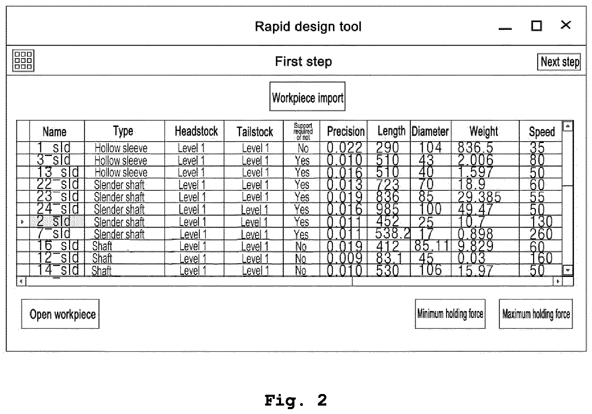

Fig. 2 is a schematic diagram of the import of related information of a workpiece from a database in an example of the present invention. As shown in Fig. 2, the information includes: name and type of workpiece, type of headstock, type of tailstock, support required or not, required machining precision, maximum length, diameter, weight and supported revolution speed. Information not shown in Fig. 2 further includes: grinding force, structure information and position information.

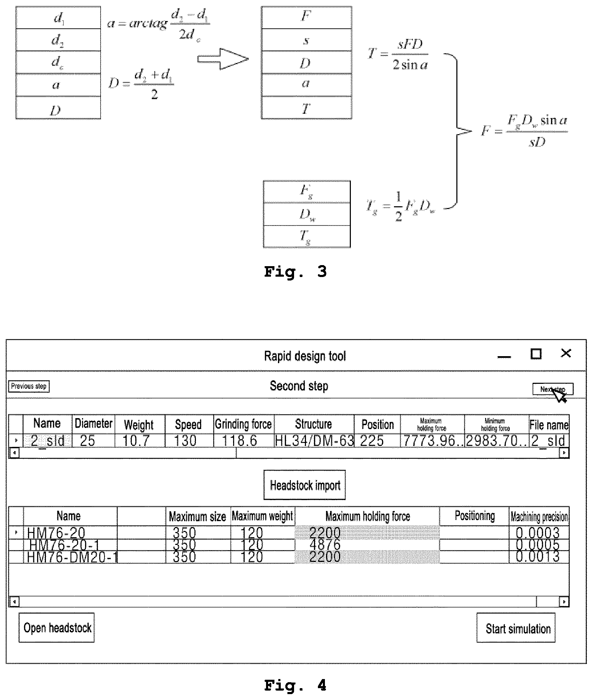

Fig. 3 a schematic diagram of the process of calculating a minimum holding force required for holding a workpiece in an example of the present invention where the machining equipment is a grinding machine and the end zone is a center. As shown in Fig. 3, the average diameter D of the conical surface and the conical angle a are first figured out according to the top surface diameter $d_1$, the bottom surface diameter $d_2$ and the height $d_c$ of the conical surface of a holding end of the workpiece in contact with the center of the headstock or tailstock, that is, formula (1) below holds:

$$a = arctag\frac{d_2 - d_1}{2d_c} \qquad D = \frac{d_2 + d_1}{2} \qquad (1)$$

Then, a relation formula between a minimum holding force F and a torque T, namely, formula (2) below, can be obtained according to the average diameter D of the conical surface and the conical angle a obtained according to formula (1), and the obtained coefficient s of friction:

$$T = \frac{sFD}{2\sin\theta} \qquad (2)$$

The expression, namely, formula (3) below, of a machining torque, for example, a grinding torque $T_g$, can be obtained according to the obtained exerted force, for example, grinding force $F_g$ and the maximum machining diameter $D_w$ of a machined surface:

$$T_g = \frac{1}{2} F_g D_w \qquad (3)$$

Since the machining torque in formula (3) is the torque T in formula (2), the expression of a minimum holding force F, namely, formula (4) below, can be derived according to formula (2) and formula (3):

$$F = \frac{F_g D_w \sin a}{sD} \qquad (4)$$

Thus, a minimum holding force required for holding a workpiece can be obtained.

Step 102, process a CAD model of the workpiece by use of the finite element analysis method, perform calculations based on a given first holding force to obtain a deformation amount of the workpiece corresponding to the holding force, and obtain a workpiece characteristic curve representing a linear relationship between a holding force and a deformation amount of the workpiece according to the given first holding force and the corresponding deformation amount of the workpiece.

In this step, since the holding force is exerted on the two ends of the workpiece, deformation amounts of finite element nodes can be collected and the maximum deformation amount of finite element nodes on a machined surface can be used as the deformation amount of the workpiece when the deformation amount of the workpiece is calculated under the given first holding force. In addition, since the relationship between a deformation amount and a holding force is considered as a linear relationship, the slope of the linear relationship can be obtained according to the given first holding force and the corresponding deformation amount of the workpiece, and then the workpiece characteristic curve representing a linear relationship between a holding force and a deformation amount of the workpiece can be obtained.

Step 103, determine a headstock and a tailstock for holding the workpiece, process a CAD model of the determined headstock and tailstock by use of the finite element analysis method, perform calculations based on a given second holding force to obtain a deformation amount of the headstock and the tailstock corresponding to the second holding force, and obtain a headstock-tailstock characteristic curve representing a linear relationship between a holding force and a deformation amount of the headstock and the tailstock according to the given second holding force and the corresponding deformation amount of the headstock and the tailstock.

In this step, there are a plurality of methods of determining a headstock and a tailstock for holding the workpiece. For example, a headstock and a tailstock for holding the workpiece may be selected by the user on a man-machine interface, and in this case, the headstock and the tailstock selected by the user in response to a selection instruction of the user for the required headstock and tailstock may be determined to be a headstock and a tailstock for holding the workpiece.

A headstock and a tailstock for holding the workpiece may also be automatically determined by the system. For example, the minimum holding force, and the acquired weight and size of the workpiece may be matched with the rated maximum holding forces, maximum holding weights and maximum holding sizes of different headstocks and tailstocks according to the set requirements, and the successfully matched headstock and tailstock having the highest machining precision may be determined to be a headstock and a tailstock for holding the workpiece. In this case, related information of different headstocks and tailstocks, including rated maximum holding forces, maximum holding weights and maximum holding sizes may be stored in a database. In this way, the information may be read from the database when required.

Fig. 4 is a schematic diagram of automatic matching of a headstock and a tailstock in an example. As shown in Fig. 4, the upper table in Fig. 4 lists some parameter information of the current workpiece, including name, diameter, weight, revolution speed, grinding force, structure, position, maximum holding force, minimum holding force and file name. The lower table in Fig. 4 lists some parameter information of headstocks, including name, rated maximum size, rated maximum weight, rated maximum holding force, positioning and machining precision. The machining precisions of different headstocks are ranked in descending order in Fig. 4. After automatic matching, the headstocks that cannot be used are highlighted, and thus, the headstock that can be used is the headstock whose name is HM76-20-1.

In addition, when a deformation amount of the headstock and the tailstock is calculated, a CAD model of the headstock and the tailstock is imported and is processed by use of the finite element analysis method to obtain the deformation amount. The deformation amount of the bearing holes in the headstock and the tailstock may correspond to the machining precision of the headstock and the tailstock. If the bearing holes are deformed, the bearing will rotate with a deviation. Therefore, a deformation amount of the roundness of the bearing holes may be considered as a deformation amount of the bearing holes. Therefore, a deformation amount of the roundness of the bearing holes in the headstock and the tailstock in the CAD model may be calculated based on a given second holding force and the obtained deformation amount of the roundness of the bearing holes may be used as the deformation amount of the headstock and the tailstock corresponding to the second holding force in this step.

Wherein, the first holding force and the second holding force may be the same or may be different.

Step 104, for the same holding force in the workpiece characteristic curve and the headstock-tailstock characteristic curve, add the deformation amount of the workpiece and the deformation amount of the headstock and the tailstock together as a deformation amount of the system to obtain a system characteristic curve representing a linear relationship between a holding force and a deformation amount of the system.

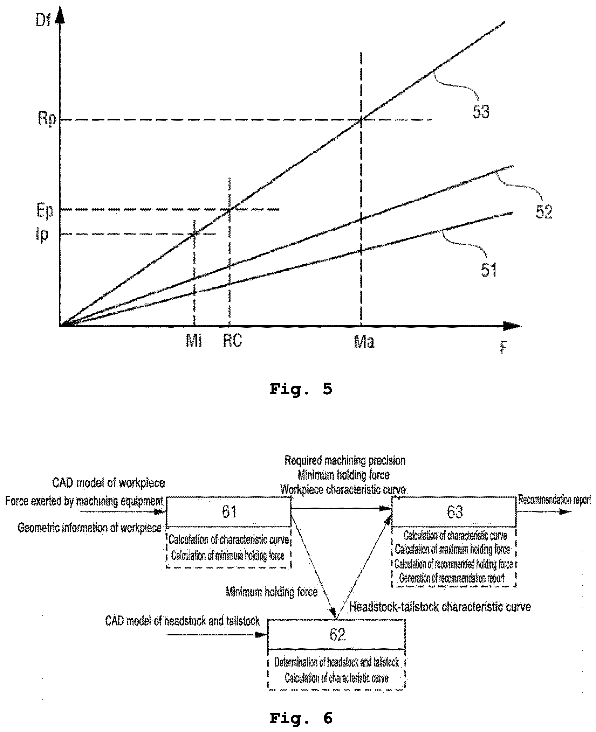

Fig. 5 is a schematic diagram of a workpiece characteristic curve 51, a headstock-tailstock characteristic curve 52 and a system characteristic curve 53 in an example. In Fig. 5, the horizontal coordinate represents a holding force F, and the vertical coordinate represents a deformation amount Df of the system.

Step 105, substitute the required machining precision of the workpiece as a maximum deformation amount of the system into the system characteristic curve to obtain a corresponding maximum allowable holding force.

As shown in Fig. 5, the required machining precision Rp and the corresponding maximum allowable holding force Ma are shown.

Step 106, determine a recommended holding force between the minimum holding force and the maximum holding force.

An intermediate value between the minimum holding force Mi and the maximum holding force Ma may be randomly selected as the recommended holding force RC, or an empirical value may be added to the minimum holding force Mi to obtain the recommended holding force and the recommended holding force must be less than the maximum allowable holding force Ma. After that, the recommended holding force RC is provided for the user. In addition, the recommended holding force RC may be substituted into the system characteristic curve to obtain a corresponding recommended deformation amount of the system, the recommended deformation amount of the system is used as a recommended machining precision Ep, and the recommended machining precision Ep is provided for the user.

In the present embodiment, the minimum holding force Mi may further be substituted into the system characteristic curve to obtain a corresponding deformation amount of the system, and the minimum deformation amount of the system is used as an ideal machining precision Ip.

Further, a recommendation report may be generated, the recommendation report contains a required machining precision, a maximum holding force, an ideal machining precision, a minimum holding force, a recommended machining precision and a recommended holding force, and the recommendation report is provided for the user.

In an example, the system characteristic curve marked with a required machining precision Rp, a maximum holding force Ma, an ideal machining precision Ip, a minimum holding force Mi, a recommended machining precision Ep and a recommended holding force RC in Fig. 5 may be directly provided for the user as a recommendation report or a part of a recommendation report.

The holding force determining method provided by embodiments of the present invention has been described in detail above, and the holding force determining apparatus provided by embodiments of the present invention will be described in detail below. The holding force determining apparatus in embodiments of the present invention can be used to execute the holding force determining method in embodiments of the present invention. For details not disclosed in the embodiments of the holding force determining apparatus of the present invention, refer to the corresponding description in the embodiments of the holding force determining method of the present invention. These details will not be given here again.

Fig. 6 is an exemplary structure diagram of a holding force determining apparatus in embodiments of the present invention. As shown in Fig. 6, the apparatus may comprise: a workpiece information calculation module 61, a headstock and tailstock information calculation module 62 and a system evaluation module 63.

Wherein, the workpiece information calculation module 61 is configured to calculate a required minimum holding force according to the force exerted by machining equipment, the coefficient of friction and the geometrical information of a workpiece; process a CAD model of the workpiece by use of the finite element analysis method, perform calculations based on a given first holding force to obtain a deformation amount of the workpiece corresponding to the holding force, and obtain a workpiece characteristic curve representing a linear relationship between a holding force and a deformation amount of the workpiece according to the given first holding force and the corresponding deformation amount of the workpiece.

In an example, when the machining equipment is a grinding machine and the end zone is a center, geometrical information of the workpiece includes: top surface diameters, bottom surface diameters and heights of the conical surfaces of the holding ends of the workpiece in contact with the centers of the headstock and tailstock, and a maximum machining diameter of a machined surface. The workpiece information calculation module 61 may calculate the minimum holding force according to the formula $F = \dfrac{F_g D_w \sin a}{sD}$ . Wherein, $a = arctag\dfrac{d_2 - d_1}{2d_c}$ , $D = \dfrac{d_2 + d_1}{2}$ , $d_1$ is the top surface diameter of the conical surface of a holding end of the workpiece in contact with the center of the headstock or tailstock, $d_2$ is the bottom surface diameter of the conical surface, $d_c$ is the height of the conical surface and is also known as a central distance, $F_g$ is a force exerted by machining equipment, for example, a grinding force, a turning force, a broach force or a boring force, $D_w$ is the maximum machining diameter of a machined surface, and s is a coefficient of friction.

The headstock and tailstock information calculation module 62 is configured to determine a headstock and a tailstock for holding the workpiece, process a CAD model of the determined headstock and tailstock by use of the finite element analysis method, perform calculations based on a given second holding force to obtain a deformation amount of the headstock and the tailstock corresponding to the second holding force, and obtain a headstock-tailstock characteristic curve representing a linear relationship between a holding force and a deformation amount of the headstock and the tailstock according to the given second holding force and the corresponding deformation amount of the headstock and the tailstock.

In one implementation mode, the headstock and tailstock information calculation module 62 may match the minimum holding force, and the acquired weight and size of the workpiece with the rated maximum holding forces, maximum holding weights and maximum holding sizes of different headstocks and tailstocks, and determine the headstock and the tailstock satisfying the requirements and having the highest machining precision to be a headstock and a tailstock for holding the workpiece. In addition, when a deformation amount of the headstock and the tailstock is calculated, a deformation amount of the roundness of the bearing holes in the headstock and the tailstock in the CAD model may be calculated based on a given second holding force and the obtained deformation amount of the roundness of the bearing holes may be used as the deformation amount of the headstock and the tailstock corresponding to the second holding force.

The system evaluation module 63 is configured for the same holding force in the workpiece characteristic curve and the headstock-tailstock characteristic curve to add the deformation amount of the workpiece and the deformation amount of the headstock and the tailstock together as a deformation amount of the system to obtain a system characteristic curve representing a linear relationship between a holding force and a deformation amount of the system, substitute the required machining precision of the workpiece as a maximum deformation amount of the system into the system characteristic curve to obtain a corresponding maximum holding force, namely, a maximum allowable holding force, and determine a recommended holding force between the minimum holding force and the maximum holding force.

In one implementation mode, the system evaluation module 63 may further substitute the recommended holding force into the system characteristic curve to obtain a corresponding recommended deformation amount of the system and use the recommended deformation amount of the system as a recommended machining precision; substitute the minimum holding force into the system characteristic curve to obtain a corresponding minimum deformation amount of the system and use the minimum deformation amount of the system as an ideal machining precision.

In one implementation mode, the system evaluation module 63 further generates a recommendation report, and the recommendation report contains a required machining precision, a maximum holding force, an ideal machining precision, a minimum holding force, a recommended machining precision and a recommended holding force. In addition, the recommendation report may further contain a system characteristic curve, and the required machining precision, the maximum holding force, the ideal machining precision, the minimum holding force, the recommended machining precision and the recommended holding force are marked on the system characteristic curve.

As a plug-in, the holding force determining apparatus may be integrated into CAE software, for example, NX (Siemens). A database of parameters of workpieces and headstock and tailstocks is built for the apparatus, and the apparatus can automatically complete the whole process of a finite element analysis and other calculations. The holding force determining method is applicable not only to grinding, but also to turning, broaching and boring. In addition, the holding force determining method is applicable to most center structures.

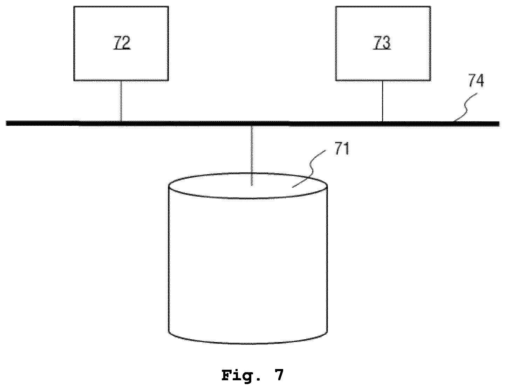

Fig. 7 is a structure diagram of another holding force determining apparatus in embodiments of the present invention, and the apparatus may be used to execute the method shown in Fig. 1 or implement the device shown in Fig. 6. As shown in Fig. 7, the apparatus may comprise at least one memory 71, at least one processor 72 and at least one display 73. In addition, the apparatus may further comprise other components, for example, a communication port. These components can communicate with each other over a bus 74.

Wherein, at least one memory 71 is configured to store a computer program. In one implementation mode, the computer program may be interpreted as the modules of the holding force determining apparatus shown in Fig. 6. In addition, at least one memory 71 may further store an operating system. The operating system includes but is not limited to an Android operating system, Symbian operating system, Windows operating system and Linux operating system.

At least one display 73 is configured to display a recommendation report.

At least one processor 72 is configured to invoke a computer program stored in at least one memory 71 to execute the holding force determining method in embodiments of the present invention.

Specifically, at least one processor 72 is configured to invoke a computer program stored in at least one memory 71 to allow the apparatus to perform corresponding operations. The operations may comprise: calculating a required minimum holding force according to the force exerted by machining equipment, the coefficient of friction and the geometrical information of a workpiece; processing a CAD model of the workpiece by use of the finite element analysis method, performing calculations based on a given first holding force to obtain a deformation amount of the workpiece corresponding to the holding force, and obtaining a workpiece characteristic curve representing a linear relationship between a holding force and a deformation amount of the workpiece according to the given first holding force and the corresponding deformation amount of the workpiece; determining a headstock and a tailstock for holding the workpiece, processing a CAD model of the determined headstock and tailstock by use of the finite element analysis method, performing calculations based on a given second holding force to obtain a deformation amount of the headstock and the tailstock corresponding to the second holding force, and obtaining a headstock-tailstock characteristic curve representing a linear relationship between a holding force and a deformation amount of the headstock and the tailstock according to the given second holding force and the corresponding deformation amount of the headstock and the tailstock; for the same holding force in the workpiece characteristic curve and the headstock-tailstock characteristic curve, adding the deformation amount of the workpiece and the deformation amount of the headstock and the tailstock together as a deformation amount of the system to obtain a system characteristic curve representing a linear relationship between a holding force and a deformation amount of the system; substituting the required machining precision of the workpiece as a maximum deformation amount of the system into the system characteristic curve to obtain a corresponding maximum allowable holding force; determining a recommended holding force between the minimum holding force and the maximum holding force.

In one implementation mode, the operations may further comprise: substituting the minimum holding force into the system characteristic curve to obtain a corresponding minimum deformation amount of the system and using the minimum deformation amount of the system as an ideal machining precision; substituting the recommended holding force into the system characteristic curve to obtain a corresponding recommended deformation amount of the system and using the recommended deformation amount of the system as a recommended machining precision.

In one implementation mode, the operations may further comprise: generating a recommendation report, and the recommendation report contains a required machining precision, a maximum holding force, an ideal machining precision, a minimum holding force, a recommended machining precision and a recommended holding force.

In one implementation mode, the recommendation report further contains a system characteristic curve, and the required machining precision, the maximum holding force, the ideal machining precision, the minimum holding force, the recommended machining precision and the recommended holding force are marked on the coordinates where the system characteristic curve is located.

In one implementation mode, the workpiece has holding ends; the headstock and tailstock have centers in contact with the holding ends; geometrical information of the workpiece includes: top surface diameters, bottom surface diameters and heights of the conical surfaces of the holding ends in contact with the centers, and a maximum machining diameter of a machined surface.

In one implementation mode, determining a headstock and a tailstock for holding the workpiece comprises: matching the minimum holding force, and the acquired weight and size of the workpiece with the rated maximum holding forces, maximum holding weights and maximum holding sizes of headstocks and tailstocks, and determining a headstock and a tailstock satisfying the requirements and having the highest machining precision to be the headstock and the tailstock for holding the workpiece.

In one implementation mode, processing a CAD model of the determined headstock and tailstock by use of the finite element analysis method and performing calculations based on a given second holding force to obtain a deformation amount of the headstock and the tailstock corresponding to the second holding force comprises: calculating a deformation amount of the roundness of the bearing holes in the headstock and the tailstock in the CAD model based on the given second holding force and using the obtained deformation amount of the roundness of the bearing holes as the deformation amount of the headstock and the tailstock corresponding to the second holding force.

The processor 72 may be a central processing unit (CPU), a processing unit/module, an application specific integrated circuit (ASIC), a logic module or a programmable gate array. The processor may receive and send data over the communication port.

It should be noted that not all the steps or modules in the above-mentioned processes and structure diagrams are required, and some steps or modules may be omitted, depending on the actual requirements. The execution sequence of the steps is not fixed and may be adjusted as required. The module division is a functional division for the convenience of description. In the practical implementation, the function of a module may be realized by a plurality of modules, and the functions of a plurality of modules may be realized by one module and these modules may be located in the same equipment or may be located in different equipment.

It should be understood that the hardware modules in different embodiments may mechanically or electronically be realized. For example, a hardware module can comprise specially designed permanent circuits or logic devices (for example, application-specific processors such as field programmable gate array (FPGA) or application specific integrated circuit (ASIC)) to complete specific operations. A hardware module can also comprise programmable logic devices or circuits (for example, general processors or other programmable processors) temporarily configured by software to perform specific operations. Whether a hardware module is realized mechanically, or by use of a dedicated permanent circuit or a temporarily configured circuit (for example, configured by software) can depend on the considerations of the cost and the time.

In addition, a computer-readable storage medium is further provided in embodiments of the present invention, a computer program is stored in the computer-readable storage medium and the computer program can be executed by a processor to realize the holding force determining method in embodiments of the present invention. Specifically, a system or apparatus equipped with a storage medium can be provided. Software program codes which can realize the function in any of above-mentioned embodiments are stored in the storage medium and the computer (or CPU or MPU) of the system or apparatus can read and execute the program codes stored in the storage medium. In addition, through the commands based on the program codes, the operating system on the computer may complete a part of or all of practical operations. In addition, the program codes read out of a storage medium can be written into the memory in the expansion board in a computer or can be written into a memory in an expansion unit connected to the computer, and then the instructions based on the program codes allow the CPU installed on the expansion board or expansion unit to execute a part or all of practical operations to realize the functions in any of the above-mentioned embodiments. Storage media used to provide program codes include a floppy disk, hard disk, magneto-optical disk, compact disk (for example, CD-ROM, CD-R, CD-RW, DVD-ROM, DVD-RAM, DVD-RW, DVD+RW), magnetic tape, non-volatile memory card, and ROM. Alternatively, the program codes may be downloaded from a server computer over a communication network.

From the above-mentioned technical solution, it can be seen that a system characteristic curve representing a linear relationship between a holding force and a deformation amount of the system by using the CAE tool to perform finite element analyses of CAD models of a workpiece and a headstock and tailstock in embodiments of the present invention. A deformation amount of the system can be used as a machining precision of a workpiece. Therefore, holding forces corresponding to different machining precisions and machining precisions corresponding to different holding forces can be figured out based on the system characteristic curve, and thus, a recommended holding force between a minimum holding force and a maximum holding force is finally obtained so that a user can select a proper holding force.

The above-mentioned embodiments are only preferred embodiments of the present invention, but are not used to restrict the present invention. Modifications, equivalent replacements, and improvements made without departing from the spirit and principle of the present invention should all fall within the scope of protection of the present invention.

**Claims**

1. A holding force determining method, **characterized in that** the holding force determining method comprises:

   calculating a required minimum holding force according to the force exerted by machining equipment, the coefficient of friction and the geometrical information of a workpiece (101);
   processing a computer-aided design (CAD) model of the workpiece by use of the finite element analysis method, performing calculations based on a given first holding force to obtain a deformation amount of the workpiece corresponding to the holding force, and obtaining a workpiece characteristic curve representing a linear relationship between a holding force and a deformation amount of the workpiece according to the given first holding force and the corresponding deformation amount of the workpiece (102);
   determining a headstock and a tailstock for holding the workpiece, processing a CAD model of the determined headstock and tailstock by use of the finite element analysis method, performing calculations based on a given second holding force to obtain a deformation amount of the headstock and the tailstock corresponding to the second holding force, and obtaining a headstock-tailstock characteristic curve representing a linear relationship between a holding force and a deformation amount of the headstock and the tailstock according to the given second holding force and the corresponding deformation amount of the headstock and the tailstock (103);

for the same holding force in the workpiece characteristic curve and the headstock-tailstock characteristic curve, adding the deformation amount of the workpiece and the deformation amount of the headstock and the tailstock together as a deformation amount of the system to obtain a system characteristic curve representing a linear relationship between a holding force and a deformation amount of the system (104);

substituting the required machining precision of the workpiece as a maximum deformation amount of the system into the system characteristic curve to obtain a corresponding maximum allowable holding force (105);

determining a recommended holding force between the minimum holding force and the maximum holding force (106).

2. The holding force determining method as claimed in claim 1, **characterized in that** the holding force determining method further comprises: substituting the minimum holding force into the system characteristic curve to obtain a corresponding minimum deformation amount of the system and using the minimum deformation amount of the system as an ideal machining precision;

substituting the recommended holding force into the system characteristic curve to obtain a corresponding recommended deformation amount of the system and using the recommended deformation amount of the system as a recommended machining precision.

3. The holding force determining method as claimed in claim 2, **characterized in that** the holding force determining method further comprises: generating a recommendation report, and the recommendation report contains a required machining precision, a maximum holding force, an ideal machining precision, a minimum holding force, a recommended machining precision and a recommended holding force.

4. The holding force determining method according to claim 3, **characterized in that** the recommendation report further contains a system characteristic curve, and the required machining precision, the maximum holding force, the ideal machining precision, the minimum holding force, the recommended machining precision and the recommended holding force are marked on the system characteristic curve.

5. The holding force determining method as claimed in any of claims 1 to 4, **characterized in that** the workpiece has holding ends; the headstock and tailstock have a center in contact with the holding ends; geometrical information of the workpiece includes: a top surface diameter, a bottom surface diameter and a height of a conical surface of a holding end in contact with a center, and a maximum machining diameter of a machined surface.

6. The holding force determining method as claimed in any of claims 1 to 4, **characterized in that** determining a headstock and a tailstock for holding the workpiece comprises: matching the minimum holding force, and the acquired weight and size of the workpiece with rated maximum holding forces, maximum holding weights and maximum holding sizes of different headstocks and tailstocks, and determining a headstock and a tailstock satisfying the requirements and having the highest machining precision to be the headstock and the tailstock for holding the workpiece.

7. The holding force determining method as claimed in any of claims 1 to 4, **characterized in that** processing a CAD model of the determined headstock and tailstock by use of the finite element analysis method and performing calculations based on a given second holding force to obtain a deformation amount of the headstock and the tailstock corresponding to the second holding force comprises:

calculating a deformation amount of the roundness of the bearing holes in the headstock and the tailstock in the CAD model based on the given second holding force and using the obtained deformation amount of the roundness of the bearing holes as the deformation amount of the headstock and the tailstock corresponding to the second holding force.

8. A holding force determining apparatus, **characterized in that** the holding force determining apparatus comprises: at least one memory (71) and at least one processor (72), wherein:

the at least one memory (71) is configured to store a computer program;

the at least one processor (72) is configured to invoke a computer program stored in the at least one memory (71) to allow the apparatus to perform corresponding operations, and the operations include:

calculating a required minimum holding force according to the force exerted by machining equipment, the coefficient of friction and the geometrical information of a workpiece;

processing a computer-aided design (CAD) model of the workpiece by use of the finite element analysis method, performing calculations based on a given first holding force to obtain a deformation amount of the workpiece corresponding to the holding force, and obtaining a workpiece characteristic curve representing a linear relationship between a holding force and a deformation amount of the workpiece according to the given first holding force and the corresponding deformation amount of the workpiece;

determining a headstock and a tailstock for holding the workpiece, processing a CAD model of the determined headstock and tailstock by use of the finite element analysis method, performing calculations based on a given second holding force to obtain a deformation amount of the headstock and the tailstock corresponding to the second holding force, and obtaining a headstock-tailstock characteristic curve representing a linear relationship between a holding force and a deformation amount of the headstock and the tailstock according to the given second holding force and the corresponding deformation amount of the headstock and the tailstock;

for the same holding force in the workpiece characteristic curve and the headstock-tailstock characteristic curve, adding the deformation amount of the workpiece and the deformation amount of the headstock and the tailstock together as a deformation amount of the system to obtain a system characteristic curve representing a linear relationship between a holding force and a deformation amount of the system;

substituting the required machining precision of the workpiece as a maximum deformation amount of the system into the system characteristic curve to obtain a corresponding maximum allowable holding force;

determining a recommended holding force between the minimum holding force and the maximum holding force.

9. The holding force determining apparatus as claimed in claim 8, **characterized in that** the operations further comprise:
substituting the minimum holding force into the system characteristic curve to obtain a corresponding minimum deformation amount of the system and using the minimum deformation amount of the system as an ideal machining precision;
substituting the recommended holding force into the system characteristic curve to obtain a corresponding recommended deformation amount of the system and using the recommended deformation amount of the system as a recommended machining precision.

10. The holding force determining apparatus as claimed in claim 9, **characterized in that** the operations further comprise:
generating a recommendation report, and the recommendation report contains a required machining precision, a maximum holding force, an ideal machining precision, a minimum holding force, a recommended machining precision, and a recommended holding force.

11. The holding force determining apparatus as claimed in claim 10, **characterized in that** the recommendation report further contains a system characteristic curve, and the required machining precision, the maximum holding force, the ideal machining precision, the minimum holding force, the recommended machining precision and the recommended holding force are marked on the system characteristic curve.

12. The holding force determining apparatus as claimed in any of claims 8 to 11, **characterized in that** the workpiece has holding ends; the headstock and tailstock have a center in contact with a holding end; geometrical information of the workpiece includes: a top surface diameter, a bottom surface diameter and a height of a conical surface of a holding end in contact with a center, and a maximum machining diameter of a machined surface.

13. The holding force determining apparatus as claimed in any of claims 8 to 11, **characterized in that** determining a headstock and a tailstock for holding the workpiece comprises:
matching the minimum holding force, and the acquired weight and size of the workpiece with rated maximum holding forces, maximum holding weights and maximum holding sizes of different headstocks and tailstocks, and determining a headstock and a tailstock satisfying the requirements and having the highest machining precision to be the headstock and the tailstock for holding the workpiece.

14. The holding force determining apparatus as claimed in any of claims 8 to 11, **characterized in that** processing a CAD model of the determined headstock and tailstock by use of the finite element analysis method and performing calculations based on a given second holding force to obtain a deformation amount of the headstock and the tailstock corresponding to the second holding force comprises:
calculating a deformation amount of the roundness of the bearing holes in the headstock and the tailstock in the CAD model based on the given second holding force and using the obtained deformation amount of the roundness of the bearing holes as the deformation amount of the headstock and the tailstock corresponding to the second holding force.

15. A holding force determining apparatus, **characterized in that** the holding force determining apparatus comprises:

a workpiece information calculation module (61), configured to calculate a required minimum holding force according to the force exerted by machining equipment, the coefficient of friction and the geometrical information of a workpiece; process a CAD model of the workpiece by use of the finite element analysis method, perform calculations based on a given first holding force to obtain a deformation amount of the workpiece corresponding to the holding force, and obtain a workpiece characteristic curve representing a linear relationship between a holding force and a deformation amount of the workpiece according to the given first holding force and the corresponding deformation amount of the workpiece;

a headstock and tailstock information calculation module (62), configured to determine a headstock and a tailstock for holding the workpiece, process a CAD model of the determined headstock and tailstock by use of the finite element analysis method, perform calculations based on a given second holding force to obtain a deformation amount of the headstock and the tailstock corresponding to the second holding force, and obtain a headstock-tailstock characteristic curve representing a linear relationship between a holding force and a deformation amount of the headstock and the tailstock according to the given second holding force and the corresponding deformation amount of the headstock and the tailstock;

a system evaluation module (63), configured for the same holding force in the workpiece characteristic curve and the headstock-tailstock characteristic curve to add the deformation amount of the workpiece and the deformation amount of the headstock and the tailstock together as a deformation amount of the system to obtain a system characteristic curve representing a linear relationship between a holding force and a deformation amount of the system, substitute the required machining precision of the workpiece as a maximum deformation amount of the system into the system characteristic curve to obtain a corresponding maximum allowable holding force, and determine a recommended holding force between the minimum holding force and the maximum holding force.

16. A computer-readable storage medium, storing a computer program, **characterized in that** the computer program can be executed by a processor to realize the holding force determining method as claimed in any of claims 1 to 7.

```
┌─────────────────────────┐
│           101           │
└─────────────────────────┘
             │
             ▼
┌─────────────────────────┐
│           102           │
└─────────────────────────┘
             │
             ▼
┌─────────────────────────┐
│           103           │
└─────────────────────────┘
             │
             ▼
┌─────────────────────────┐
│           104           │
└─────────────────────────┘
             │
             ▼
┌─────────────────────────┐
│           105           │
└─────────────────────────┘
             │
             ▼
┌─────────────────────────┐
│           106           │
└─────────────────────────┘
```

Fig. 1

| Name | Type | Headstock | Tailstock | Support required or not | Precision | Length | Diameter | Weight | Speed |
|---|---|---|---|---|---|---|---|---|---|
| 1_sld | Hollow sleeve | Level 1 | Level 1 | No | 0.022 | 290 | 104 | 836.5 | 35 |
| 3_sld | Hollow sleeve | Level 1 | Level 1 | Yes | 0.010 | 510 | 43 | 2.006 | 80 |
| 13_sld | Hollow sleeve | Level 1 | Level 1 | Yes | 0.016 | 510 | 40 | 1.597 | 50 |
| 22_sld | Slender shaft | Level 1 | Level 1 | Yes | 0.013 | 723 | 70 | 18.9 | 60 |
| 23_sld | Slender shaft | Level 1 | Level 1 | Yes | 0.019 | 836 | 85 | 29.385 | 55 |
| 24_sld | Slender shaft | Level 1 | Level 1 | Yes | 0.016 | 985 | 100 | 49.47 | 50 |
| 2_sld | Slender shaft | Level 1 | Level 1 | Yes | 0.011 | 452 | 25 | 10.7 | 130 |
| 7_sld | Slender shaft | Level 1 | Level 1 | Yes | 0.011 | 538.2 | 17 | 0.898 | 260 |
| 16_sld | Shaft | Level 1 | Level 1 | No | 0.019 | 412 | 85.11 | 9.829 | 60 |
| 12_sld | Shaft | Level 1 | Level 1 | No | 0.009 | 83.1 | 45 | 0.03 | 160 |
| 14_sld | Shaft | Level 1 | Level 1 | No | 0.010 | 530 | 106 | 15.97 | 50 |

Rapid design tool

First step — Next step

Workpiece import

Open workpiece — Minimum holding force — Maximum holding force

**Fig. 2**

$$d_1$$
$$d_2$$
$$d_c$$
$$a$$
$$D$$

$$a = arctag\frac{d_2 - d_1}{2d_c}$$

$$D = \frac{d_2 + d_1}{2}$$

$$F$$
$$s$$
$$D$$
$$a$$
$$T$$

$$T = \frac{sFD}{2\sin a}$$

$$F_g$$
$$D_w$$
$$T_g$$

$$T_g = \frac{1}{2}F_g D_w$$

$$F = \frac{F_g D_w \sin a}{sD}$$

**Fig. 3**

---

| Rapid design tool | — ☐ ✕ |
|---|---|

| Previous step | Second step | Next step |
|---|---|---|

| | Name | Diameter | Weight | Speed | Grinding force | Structure | Position | Maximum holding force | Minimum holding force | File name |
|---|---|---|---|---|---|---|---|---|---|---|
| ▸ | 2_sld | 25 | 10.7 | 130 | 118.6 | HL34/DM-63 | 225 | 7773.96.. | 2983.70.. | 2_sld |

Headstock import

| | Name | | Maximum size | Maximum weight | Maximum holding force | Positioning | Machining precision |
|---|---|---|---|---|---|---|---|
| ▸ | HM76-20 | | 350 | 120 | 2200 | | 0.0003 |
| | HM76-20-1 | | 350 | 120 | 4876 | | 0.0005 |
| | HM76-DM20-1 | | 350 | 120 | 2200 | | 0.0013 |

| Open headstock | | Start simulation |
|---|---|---|

**Fig. 4**

**Fig. 5**

**Fig. 6**

72   73   74

71

Fig. 7

## INTERNATIONAL SEARCH REPORT

| International application No. |
| --- |
| **PCT/CN2020/112524** |

| A. | CLASSIFICATION OF SUBJECT MATTER |
| --- | --- |
| | B23B 23/00(2006.01)i; B23Q 17/00(2006.01)i |

According to International Patent Classification (IPC) or to both national classification and IPC

| B. | FIELDS SEARCHED |
| --- | --- |

Minimum documentation searched (classification system followed by classification symbols)

    B23B; B23Q

Documentation searched other than minimum documentation to the extent that such documents are included in the fields searched

Electronic data base consulted during the international search (name of data base and, where practicable, search terms used)

    CNABS, CNKI, DWPI, SIPOABS: 顶持力, 最小, 最大, 变形量, 精度, tip, hold+, force, max, min, deformation, precision

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 105033288 A (BEIJING XINGHUA MACHINERY FACTORY) 11 November 2015 (2015-11-11)<br>    see description, paragraphs 17-27, figures 1-2 | 1-16 |
| A | CN 102133651 A (DALIAN MACHINE TOOL GROUP CORPORATION) 27 July 2011 (2011-07-27)<br>    see entire document | 1-16 |
| A | CN 1747813 A (BRIOT INTERNAT) 15 March 2006 (2006-03-15)<br>    see entire document | 1-16 |
| A | CN 105562580 A (NORTHWESTERN POLYTECHNICAL UNIVERSITY) 11 May 2016 (2016-05-11)<br>    see entire document | 1-16 |
| A | US 2008042682 A1 (AMMI SADATSUNE) 21 February 2008 (2008-02-21)<br>    see entire document | 1-16 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 April 2021** | **13 May 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/112524**

| Patent document cited in search report | | | Publication date (day/month/year) | Patent family member(s) | | | Publication date (day/month/year) |
|---|---|---|---|---|---|---|---|
| CN | 105033288 | A | 11 November 2015 | CN | 105033288 | B | 28 July 2017 |
| CN | 102133651 | A | 27 July 2011 | CN | 102133651 | B | 09 September 2015 |
| CN | 1747813 | A | 15 March 2006 | FR | 2850893 | B1 | 08 December 2006 |
| | | | | EP | 1592534 | A1 | 09 November 2005 |
| | | | | WO | 2004078414 | A1 | 16 September 2004 |
| | | | | CN | 100546767 | C | 07 October 2009 |
| | | | | FR | 2850893 | A1 | 13 August 2004 |
| | | | | DE | 602004021562 | D1 | 30 July 2009 |
| | | | | WO | 2004078414 | A8 | 29 September 2005 |
| | | | | EP | 1592534 | B1 | 17 June 2009 |
| CN | 105562580 | A | 11 May 2016 | CN | 105562580 | B | 31 October 2017 |
| US | 2008042682 | A1 | 21 February 2008 | US | 7461439 | B2 | 09 December 2008 |
| | | | | JP | 4822956 | B2 | 24 November 2011 |
| | | | | JP | 2008006543 | A | 17 January 2008 |
| | | | | DE | 102007029892 | B4 | 21 February 2019 |
| | | | | DE | 102007029892 | A1 | 14 February 2008 |

Form PCT/ISA/210 (patent family annex) (January 2015)